# EUROPEAN PATENT APPLICATION

(11) **EP 4 060 497 A1**
(43) Date of publication of application: **21.09.2022**
(21) Application number: 22161977.8
(22) Date of filing: 14.03.2022
(51) Int. Cl.: G06F 9/54

(54) **METHOD FOR INTER-PROCESS COMMUNICATION, RELATED COMPUTING DEVICE AND STORAGE MEDIUM**

(30) Priority: 19.03.2021 CN 202110294963
(71) Applicant: Beijing Tusen Zhitu Technology Co., Ltd., Beijing 100016 (CN)
(72) Inventor: WU, Hao, Beijing, 100016 (CN); JIN, Jiangming, Beijing, 100016 (CN)
(74) Representative: Murgitroyd & Company

(57) **Abstract**

The present disclosure relates to a method for inter-process communication, a related computing device and storage medium. The method for inter-process communication comprises: receiving, by a first process, a request for a storage space of a first size; requesting, by the first process, a first number of shared memory blocks from an operating system, wherein the storage space of each shared memory block is not smaller than the first size; in response to the operating system allocating the first number of shared memory blocks, adding, by the first process, the first number of first nodes in a first linked list, wherein each of the first nodes corresponds to a respective one of the allocated shared memory blocks; and sending, by the first process, identifiers associated with the allocated shared memory blocks to a second process.

## Description

### TECHNICAL FIELD

The present disclosure relates to the field of computer technology, and in particular to a method for inter-process communication, a related computing device and a storage medium.

### BACKGROUND

With the rapid development of computer technology and the increasing requirements of people on applications, a single-process program cannot meet the requirements of people in many occasions, and writing a multi-process and multithreaded program become an important characteristic of current program design. In multi-process programming, inter-process communication is often required.

### SUMMARY

The present disclosure provides a method for inter-process communication, a related computing device and storage medium, which can reduce data copies and achieve efficient inter-process communication.

In one aspect, the present disclosure provides a method for inter-process communication, comprising:
receiving, by a first process, a request of a storage space of a first size;
requesting, by the first process, a first number of shared memory blocks from an operating system, wherein the storage space of each shared memory block is not smaller than the first size;
in response to the operating system allocating the first number of shared memory blocks, adding, by the first process, a first number of first nodes in a first linked list, wherein each of the first nodes corresponds to a respective one of the allocated shared memory blocks; and
sending, by the first process, an identifier associated with the allocated shared memory blocks to a second process.

In another aspect, the present disclosure provides a computing device, comprising:
one or more processors; and
a memory storing one or more programs that, when being executed by the one or more processors, causes the one or more processors to implement the method disclosed herein.

In another aspect, the present disclosure provides a computer-readable storage medium having a program stored thereon, wherein the program, when being executed by a processor, implements the method disclosed herein.

According to the present disclsoure, the inter-process communication is realized by adopting shared memory, and the processes can directly read and write the memory, thus reducing data copies. This is an effective mechanism of inter-process communication (IPC), and can realize efficient messaging. Furthermore, according to the present disclsoure, without foreknowledge of the size of the data to be transmitted (e.g., message), a user can dynamically extend a message. Therefore, the data copies can be reduced regardless of whether static messages or dynamic messages are transmitted between different processes.

### BRIEF DESCRIPTION OF THE DRAWINGS

In order to more clearly illustrate the embodiments of the present invention or technical schemes in the prior art, the drawings used in the description of the embodiments or prior art will be briefly described below. It is apparent that other drawings can be derived from these drawings by those of ordinary skilled in the art without making creative efforts.
FIG. 1 illustrates a schematic diagram of inter-process communication according to an exemplary embodiment of the present disclsoure;
FIG. 2 illustrates a schematic diagram of acquiring a logical address corresponding to an abstract pointer according to an exemplary embodiment of the present disclsoure;
FIG. 3 illustrates the structure of a message according to one example of the present disclsoure;
FIG. 4 illustrates a flowchart of the method for inter-process communication according to an exemplary embodiment of the present disclsoure;
FIG. 5 illustrates one example of inter-process communication according to the present disclsoure;
FIG. 6 illustrates another example of inter-process communication according to the present disclsoure;
FIG. 7 illustrates yet another example of inter-process communication according to the present disclsoure; and
FIG. 8 illustrates a schematic structure of an exemplary computing device according to the present disclsoure.

### DETAILED DESCRIPTION

The technical schemes in the embodiments of the present invention will be clearly and completely described below with reference to the accompanying drawings. It is obvious that the described embodiments are only part of the embodiments of the present invention rather than all of the embodiments. Based on the embodiments in the present specification, various variations and modifications can be made by those of ordinary skills in the art, and all technical schemes obtained by equivalent modifications shall fall within the protection scope of the present invention.

To facilitate a clear description of the technical schemes of the embodiments disclosed herein, in the embodiments of the present invention, the terms "first", "second", etc., are used to distinguish the same items or similar items with basically the same functions or actions, and those skilled in the art will appreciate that the terms "first", "second", etc., are not intended to limit the quantity and execution order.

The term "and/or" used herein is merely an associative relationship describing associated objects, and refers to that there may be three relationships, for example, A and/or B, may refers to that: A is present alone, A and B are present simultaneously, and B is present alone. In addition, the character "/" used herein generally indicates an "or" relationship between the associated objects.

Embodiments of the present disclsoure provides a method for implementing inter-process communication by using shared memory, a related computing device and storage medium, which can reduce data copies and achieve efficient inter-process communication.

In addition, the inventor noticed that, for a static message (i.e., the required storage space by the message remains unchanged while the process is operating), the size of the storage space required by the message may be known in advance, and the size of the shared memory block may be determined at initialization. However, for a dynamic message (e.g., the storage space required by the message during process operation increases dynamically) to be transmitted, if the size of the shared memory block is determined at initialization, the dynamically increased storage space may exceed the size of the shared memory block since the size of the shared memory block cannot be changed after initialization.

According to some embodiments of the present disclsoure, a user can dynamically extend the message without foreknowledge of the size of the message to be transmitted. Therefore, the data copies can be reduced regardless of whether static messages or dynamic messages are transmitted between different processes.

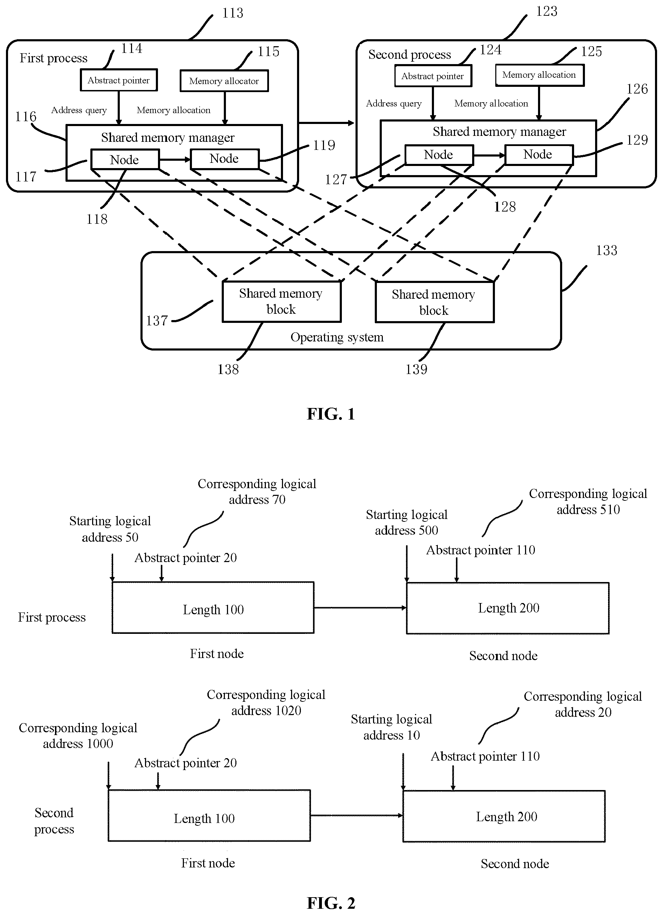

FIG. 1 illustrates a schematic diagram of inter-process communication according to some embodiments of the present disclsoure. As shown in FIG. 1, an operating system 133 is responsible for managing a memory 137, wherein a plurality of blocks of the memory 137 may be shared between processes (e.g., a first process 113 and a second process 123), such blocks also being referred to as shared memory blocks, such as a first shared memory block 138 and a second shared memory block 139. Each of the shared memory blocks may be a contiguous storage space in the memory.

Each process may have a memory allocator and a shared memory manager. For example, the first process 113 has a memory allocator 115 and a shared memory manager 116. Similarly, the second process 123 has a memory allocator 125 and a shared memory manager 126. One of the first process 113 and the second process 123 may be a sending process, and the other may be a receiving process. For example, as shown in FIG. 1, the first process 113 is a sending process and the second process 123 is a receiving process.

The shared memory manager is responsible for maintaining the linked lists, wherein each of the linked lists comprises a plurality of nodes each corresponding to one shared memory block, and corresponding nodes of different linked lists may correspond to the same shared memory block. The linked list as used herein is also referred to as a shared memory linked list. For example, the shared memory manager 116 maintains a linked list 117, wherein the linked list 117 comprises a plurality of nodes, such as a first node 118 and a second node 119. The shared memory manager 126 maintains a linked list 127, wherein the linked list 127 comprises a plurality of nodes, such as a first node 128 and a second node 129. The first node 118 of the linked list 117 and the first node 128 of the linked list 127 may both correspond to the first shared memory block 138, and the second node 119 of the linked list 117 and the second node 129 of the linked list 127 may both correspond to the second shared memory block 139.

In some embodiments of the present disclsoure, when the operating system allocates a shared memory block to a certain process, in a case that the process has no linked list, the process may create a linked list (for example, the linked list may be created by the shared memory manager) which comprises a node corresponding to the allocated shared memory block. Subsequently, when the operating system allocates a new shared memory block to the process, the process adds a new node to the linked list, for example, at the end of the linked list. The linked lists may be synchronized between shared memory managers of different processes. For example, when the operating system allocates a new shared memory block to the first process 113, the first process adds a new node at the end of the linked list 117, and then the linked list 117 and the linked list 127 are synchronized between the shared memory manager 116 of the first process 113 and the shared memory manager 126 of the second process 123. Thus, through the synchronization between the shared memory manager 116 and the shared memory manager 126, a new node is added at the end of the linked list 127. The new added node at the end of the linked list 117 and the new added node at the end of the linked list 127 both correspond to the new allocated shared memory block.

In some embodiments of the present disclsoure, the nodes of the linked list can store logical addresses, and a mapping between the logical addresses and the physical addresses of a shared memory block corresponding to a node may be stored in the process or in the operating system, such that the shared memory block can be addressed through the logical addresses.

Since the logical addresses corresponding to physical addresses of the same shared memory block are generally consecutive, in some embodiments of the present disclsoure, each node of the linked list only stores a starting logical address corresponding to a starting physical address (or a starting pointer) of the corresponding shared memory block, such that the starting physical address of the shared memory block can be determined by the starting logical address. Each node of the linked list can also store a length value, i.e., the size of the space of the corresponding shared memory block. The length value, for example, may be consistent with the number of physical addresses (or pointers) of the shared memory block. The memory allocator can calculate, according to the starting logical address and the length value, all logical addresses corresponding to the shared memory block, i.e., all logical addresses represented by the corresponding linked list node.

The memory allocator stores the use state information for logical addresses indicated in the linked list of the shared memory manager (i.e., whether the logical addresses have been allocated to the message (including child message or parent message) and other data). When a request of a user for a storage space for a message (or a child message or a parent message) is received, the memory allocator determines whether an unallocated logical address space with the required size is available or not from the logical addresses indicated in the linked list according to the use state information. In some embodiments, the unallocated logical address space has to be contiguous. Since the node corresponds to the shared memory block, and the logical addresses correspond to the physical addresses of the shared memory block, the memory allocator can be aware of whether an unallocated (or unused) physical address space of the required size is available in the shared memory blocks by determining whether an unallocated logical address space of the corresponding size is available. When determining that there is an unallocated logical address space with the required size, the memory allocator allocates the logical address space with the required size and the corresponding abstract pointer to the message (or child message or parent message), and provides the abstract pointer to the user. In some embodiments, the abstract pointer corresponds to the starting logical address of the logical address space allocated by the memory allocator. When determining that there is no unallocated logical address space of the required size, the memory allocator determines to request the size and number of memory blocksfrom the operating system.

In some embodiments of the present disclsoure, the process may receive an abstract pointer provided by a user, and query the shared memory manager for the logical address corresponding to the abstract pointer. For example, the first process 113 may query the shared memory manager 116, according to an abstract pointer 114 provided by the user, for the logical address corresponding to the abstract pointer 114. As described above, the abstract pointer represents an offset, such that adding the abstract pointer (i.e., offset) to the starting logical address of the node can result in the logical address corresponding to the abstract pointer. When the logical address corresponding to the abstract pointer is known, the corresponding physical address in the shared memory block can be located.

In some embodiments, the abstract pointer is a global pointer. That is, the offset represented by the abstract pointer may span different nodes, or in other words, the offset represented by the abstract pointer is for the entire linked list, i.e., an offset relative to the first logical address of the first one of the nodes of the entire linked list (i.e., the starting logical address). For example, as shown in FIG. 2, the first node of the first process maintains a starting logical address of 50 and a length value of 100, and the second node of the first process maintains a starting logical address of 500 and a length value of 200. The first node of the second process maintains a starting logical address of 1000 and a length value of 100, and the second node of the second process maintains a starting logical address of 10 and a length value of 200. Since the first node of the first process corresponds to the first node of the second process, the two nodes have the same length. However, as the logical addresses provided by the operating system for the different processes generally have no relationship with each other, the nodes have different starting logical addresses. Likewise, the second node of the first process corresponds to the second node of the second process, such that the two nodes have the same length but different starting logical addresses.

The starting logical address of the first node of the first process is 50. If the abstract pointer is 20, i.e., an offset of 20 relative to the starting logical address of the first node, adding the offset 20 to the starting logical address 50 gives the logical address 70, i.e., the abstract pointer 20 corresponds to the logical address 70 in the first process. The corresponding logical address 1020 of the abstract pointer 20 in the second process is acquired likewise. The operating system maps the logical address 70 and the logical address 1020 to the same physical address of the shared memory block. As such, the operating system may then acquire the physical address of the shared memory block corresponding to the abstract pointer according to the logical address 70 and the logical address 1020.

If the abstract pointer is 110, i.e., an offset of 110 which is greater than the length 100 of the first node, the length 100 of the first node is subtracted from the offset 110 to give a difference 10, i.e., an offset of 10 relative to the starting logical address of the second node. If the starting logical address of the second node of the first process is 500, adding the offset 10 to the starting logical address 500 gives the logical address 510, i.e., the abstract pointer 110 corresponds to the logical address 510 in the first process. The corresponding logical address 20 of the abstract pointer 110 in the second process is acquired likewise. The operating system maps the logical address 510 and the logical address 20 to the same physical address of the shared memory block. As such, the operating system may then acquire the physical address of the shared memory block corresponding to the abstract pointer according to the logical address 510 and the logical address 20.

In some embodiments, the message (the message may include parent message and/or child message) may be written to or read from the shared memory block by using an abstract pointer. In some embodiments, the starting physical address of the shared memory block which the message (or parent message or child message) is to be written to or read from may be acquired through the abstract pointer. In some embodiments, the message (or parent message or child message) may have a predetermined structure, such as a predetermined size or end identification. A sending process and a receiving process (i.e., the first process and the second process) both have information of the structure of the message, such that the sending process and the receiving process can be aware of the end of writing and reading of the message (or parent message or child message) according to the structure of the message.

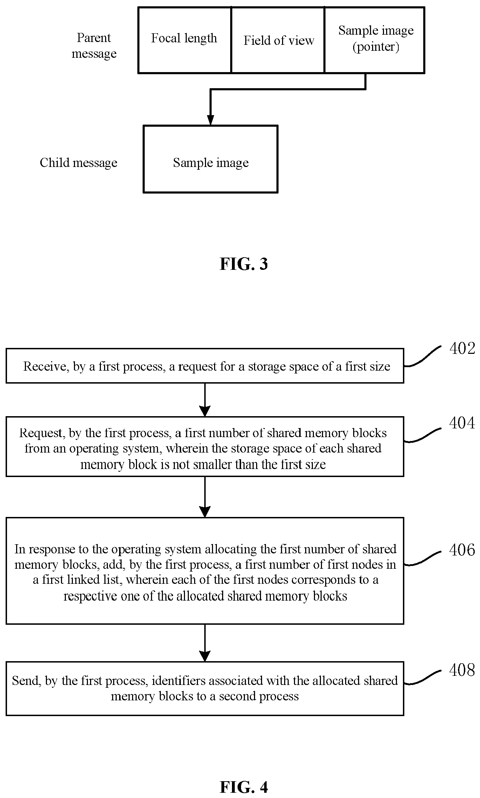

The message may include a parent message and/or one or more child messages. FIG. 3 illustrates an example of the message. In the example of FIG. 3, the message is a camera message, the parent message comprises three fields: a focal length, a field of view and a sample image, and the child message comprises a field of the sample image. Data of the parent message, such as focal length data (e.g., 8 millimeters), data of field of view (e.g., 40 degrees) and a pointer of the sample image pointing to the storage space of the child message, may be stored in a shared memory block. The image for the sample image (i.e., child message) may be stored in another shared memory block. In this example, it is assumed that the data of the sample image is too large to be stored in the same shared memory block consecutively as the data of focal length and field of view.

FIG. 4 is a flowchart of the method for inter-process communication according to an exemplary embodiment of the present disclsoure. As shown in FIG. 4, the method comprises the following steps.

At step 402, a first process receives a request for a storage space of a first size.

At step 404, the first process requests a first number of shared memory blocks from an operating system, wherein the storage space of each shared memory block is not smaller than the first size.

At step 406, in response to the operating system allocating the first number of shared memory blocks, the first process adds the first number of first nodes in a first linked list, wherein each of the first nodes corresponds to a respective one of the allocated shared memory blocks.

At step 408, the first process sendsidentifiers associated with the allocated shared memory blocks to a second process.

In some embodiments, each first node comprises a starting logical address corresponding to a starting address (i.e., a start physical address) of the shared memory block corresponding to the first node, and a length value corresponding to a size of the storage space of the shared memory block corresponding to the first node.

In some embodiments, the method for inter-process communication further comprises adding a first number of second nodes in a second linked list by the second process according to the identifiers, wherein each of the second nodes corresponds to a respective one of the allocated shared memory blocks.

In some embodiments, each second node comprises a starting logical address corresponding to a starting address (i.e., a start physical address) of the shared memory block corresponding to the second node, and a length value corresponding to a size of the storage space of the shared memory block corresponding to the second node.

In some embodiments, the method for inter-process communication further comprises allocating, by the first process, the storage space of the first size for the request, and providing an abstract pointer for accessing the allocated storage space. The first process may allocate a contiguouslogical address space for the request in the logical address space represented by each first node added in the first linked list, as the storage space of the first size. Since the logical addresses of such first nodes correspond to the physical addresses of the shared memory blocks allocated by the operating system, the first process allocating the logical address space is equivalent to allocating the physical address space of the shared memory blocks.

In some embodiments, the abstract pointer represents an offset from the starting logical address of a beginning one of the first nodes in the first linked list.

In some embodiments, the method for inter-process communication further comprises when a user assigns a value to a message, determining by the first process a logical address for the message according to the abstract pointer, thereby storing the message in the allocated shared memory block.

In some embodiments, the method for inter-process communication further comprises sending, by the first process, the abstract pointer to the second process to enable the second process to access the message according to the abstract pointer.

In some embodiments, the first number of first nodes are a first group of nodes, the allocated first number of shared memory blocks are a first group of shared memory blocks, the first linked list further comprises a second group of nodes corresponding to a second group of shared memory blocks. Adding by the first process a first number of first nodes in a first linked list comprises:

adding by the first process the first number of first nodes after the second group of nodes in the first linked list.

In some embodiments, each node in the second group of nodes represents asegment of consecutive logical addresses corresponding to physical addresses of the shared memory block corresponding to the node.

In some embodiments, the first process stores use state information of the logical addresses of the second group of nodes, and the method for inter-process communication further comprises:

determining by the first process whether a contiguous storage space of the first size is available in the second group of shared memory blocks or not according to the use state information. Since the logical addresses corresponds to the physical addresses of the shared memory block, the first process determines whether a contiguous storage space of the first size is available in the second group of shared memory blocks or not by determining whether a contiguou logical address space is available in the logical address space represented by the second group of nodes.

In some embodiments, requesting by the first process a first number of shared memory blocks from an operating system comprises: in response to the first process determining that the contiguou storage space of the first size is unavailable in the second group of shared memory blocks, requesting, by the first process, the first number of shared memory blocks from the operating system.

In some embodiments, the method for inter-process communication further comprises in response to a request from a user for a storage space of a second size for the message, requesting the second group of shared memory blocks from the operating system.

In some embodiments, the message comprises a plurality of child messages, and receiving, by a first process, a request for a storage space of a first size comprises receiving, by the first process, a request for the storage space of the first size for at least one child message of the plurality of child messages.

In some embodiments, the first size is greater than the second size.

In some embodiments, the identifier is a file descriptor.

In some embodiments, sending by the first process identifiers associated with the allocated shared memory blocks to a second processcomprises:
sending by the first process a first number of identifiers to the second process, wherein each of the identifiers is associated with one of the allocated shared memory blocks.

In some embodiments of the present disclsoure, when dynamically requesting a memory space for a child message, if the required memory space exceeds the size that can be provided by an existing shared memory block, the shared memory manager may request new shared memory blocks from the operating system. At this point, the abstract pointer stores the overall address offset obtained by concatenating the new requested shared memory blocks and the existing shared memory blocks, i.e., the global address offset. Since the mapped logical addresses of the shared memory block in different processes vary, the shared memory manager of each process needs to maintain a uniform shared memory block layout, such that the abstract pointers are consistently represented in different processes. Thus, each process maintains one (or more) linked list (i.e., shared memory linked list). When requesting a new shared memory block, the sending process inserts a node corresponding to the new requested shared memory block at the end of the linked list, and sends an identifier (such as a file descriptor) of the new requested shared memory block to the receiving process. The receiving process also inserts a new node corresponding to the new shared memory block requested by the sending process at the end of its linked list after receiving the identifier, allowing a consistent layout between the two processes. When the shared memory manager is queried for an address through the abstract pointer, the logical address corresponding to the abstract pointer in the process can be determined through the global address offset.

According to the present disclsoure, due to use of the shared memory management technology supporting dynamic extension, the message transmission can be dynamically extended, thus allowing transmission of dynamic messages, reduced data copies, and more efficient inter-process transmission. Additionally, the present disclsoure adopts an abstract pointer which represents the global address offset, such that the receiving process can accurately determine the corresponding shared memory space according to the abstract pointer.

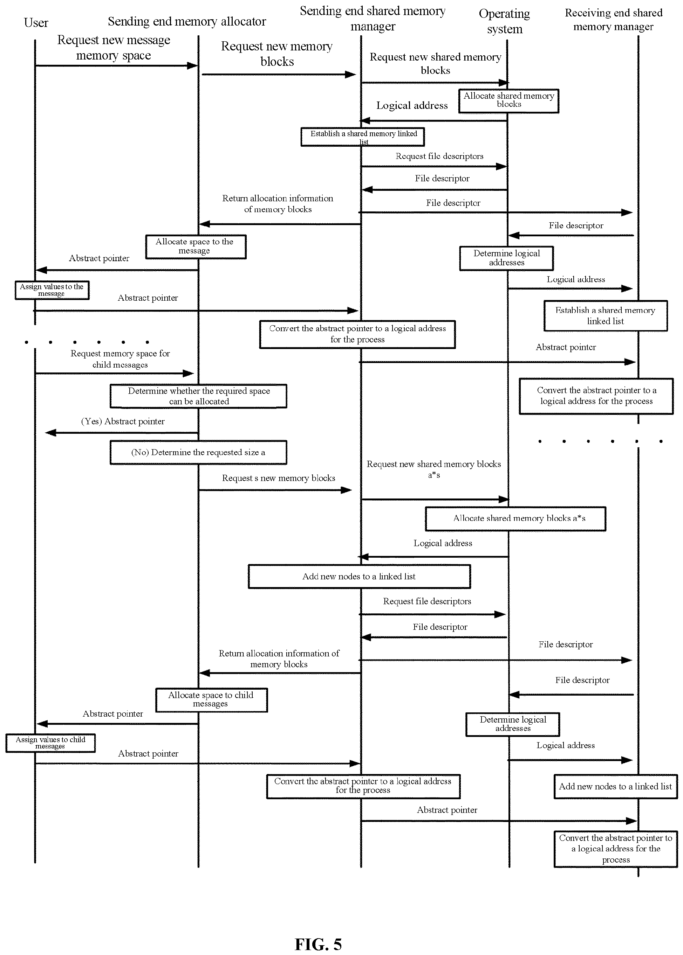

FIG. 5 illustrates an example of inter-process communication. As shown in FIG. 5, when a user determines to transmit a new message (e.g., the camera message shown in FIG. 3) among processes, the user requests a storage space of a first size (i.e., memory space) for the new message from a memory allocator of a first process. In this example, the first process is a sending end of the message. Thus, the first process is also referred to as a sending process or a sending end process, and the corresponding memory allocator of the first process is also referred to as a sending end memory allocator. The sending end memory allocator determines that no memory space has been requested for the new message, and therefore requested a first number of memory blocks of a first size from a shared memory manager of the first process (also referred to as a sending end shared memory manager). Since the shared memory manager rather than the memory allocator is responsible for the sharing of memory blocks among processes, the term memory block rather than shared memory block is generally used with regard to the memory allocator in the present disclsoure. The first number may be, for example, a default value, e.g., 10 (it is not intended to limit the default value in the present disclsoure, which may be, for example, any of 1-100, preferably any of 1-20). Alternatively, the first number may be determined by the sending end memory allocator according to a predetermined rule. For example, the first number may be a predetermined multiple of the number of memory blocks that the sending end memory allocator requested from the sending end shared memory manager last time (if the sending end memory allocator previously requested the memory blocks from the sending end shared memory manager), e.g., 2 (of course, the present disclsoure is not limited thereto, and the multiple may be, for example, any of 1-100, preferably any of 1-10).

The sending end shared memory manager then requests the first number of shared memory blocks of the first size from the operating system. According to the requesting of the sending end shared memory manager, the operating system allocates the first number of shared memory blocks of the first size, and generates logical addresses (including a starting logical address corresponding to the starting physical address of each shared memory block) for the shared memory blocks, which are provided to the sending end shared memory manager.

The sending end shared memory manager may then generate a linked list. Each node in the linked list corresponds to a shared memory block allocated by the operating system.

In some embodiments, each node in the linked list includes the logical addresses of the corresponding shared memory block. In some embodiments, the logical addresses corresponding to each shared memory block are consecutive, such that each node in the linked list may include only the starting logical address corresponding to the starting physical address of the shared memory block, and a length value of the shared memory block (i.e., the space size of the shared memory block). All the logical addresses corresponding to a shared memory block may be obtained through simple calculation according to the starting logical address and the length value.

The sending end shared memory manager then requests identifiers associated with the shared memory blocks (for example, requesting an associated identifier for each shared memory block) from the operating system. An example of the identifiers is file descriptors, each of which may be, for example, a non-negative integer.

The sending end shared memory manager sends the identifiers (e.g., file descriptors) to a shared memory manager of a second process. In this example, the second process is a receiving end of the message. Thus, the second process is also referred to as a receiving process or a receiving end process, and the corresponding shared memory manager of the second process is also referred to as a receiving end shared memory manager. The receiving end shared memory manager sends the identifiers (e.g., file descriptors) to the operating system to query for the shared memory blocks (i.e., the shared memory blocks allocated by the operating system to the first process) corresponding to the identifiers (e.g., file descriptors).

In some embodiments, the operating system adopts a table to store the correspondence of identifiers (e.g., file descriptors) and shared memory blocks allocated to the first process. When receiving identifiers (e.g., file descriptors) from the second process, the operating system queries the table to determine shared memory blocks corresponding to the identifiers (e.g., file descriptors) and generate logical addresses corresponding to the shared memory blocks for the second process. The receiving end shared memory manager may then generate a linked list, in which each node corresponds to a shared memory block. In some embodiments, each node in the linked list includes the logical addresses of the corresponding shared memory block. In some embodiments, the logical addresses corresponding to each shared memory block are consecutive, such that each node in the linked list may include only the starting logical address corresponding to the starting physical address of the shared memory block, and a length value of the shared memory block (i.e., the space size of the shared memory block). All the logical addresses corresponding to the shared memory block may be obtained through simple calculation according to the starting logical address and the length value.

During, before or after the sending of the identifiers (e.g., file descriptors) to the shared memory manager of the second process, the sending end shared memory manager returns the allocation information of memory blocks to the sending end memory allocator, so as to notify the sending end memory allocator that the memory blocks have been allocated. The sending end memory allocator then allocates logical address space and a corresponding abstract pointer to the message, and provides the abstract pointer to the user, wherein the abstract pointer corresponds to the starting logical address of the logical address space allocated by the sending end memory allocator to the message.

As described above, the message may include a parent message and one or more child messages. After receiving the abstract pointer, the user may assign values to the message, i.e., assign values to the parent message (e.g., the parent message in FIG. 3) and/or a portion of the child messages. The sending end shared memory manager converts the abstract pointer into a logical address and sends the abstract pointer to the receiving end shared memory manager. The physical address of the corresponding shared memory block may be acquired according to the logical address (i.e., the starting logical address of the logical address space allocated by the sending end memory allocator to the message) obtained through the conversion by the sending end shared memory manager, such that the first process may store (or write) the message in the shared memory block. The receiving end shared memory manager converts the abstract pointer into a logical address after receiving the abstract pointer, and the physical address of the corresponding shared memory block may be acquired according to the logical address obtained through conversion by the receiving end shared memory manager, such that the second process may access the message from the shared memory block.

When the user prepares to assign values to other child messages, especially when the user finds that a certain child message would occupy a larger storage space (for distinction, the child message is also referred to as an extended child message hereinafter), the user amy request a memory space of a second size (the memory space of the second size, for example, is larger than a memory space of the first size) for the extended child message (e.g., the sample image child message in FIG. 3) from the sending end memory allocator. The sending end memory allocator stores the use state information for logical addresses indicated in the linked list of the sending end shared memory manager (i.e., whether the logical addresses have been allocated to the message (including child message or parent message) and other data), and determines whether a logical address space is available for the extended child message according to the use state information.

In some embodiments, the parent message and the child messages of a message are stored consecutively in a shared memory block. In this case, the sending end memory allocator determines whether a contiguous logical address space is available for the extended child message according to the use state information.

If available, the sending end memory allocator then determines the logical address space to be used for the extended child message and the corresponding abstract pointer, and provides the abstract pointer to the user (the abstract pointer corresponds to the starting logical address of the logical address space allocated by the sending end memory allocator to the extended child message).

If not, the sending end memory allocator requests a second number (the second number, for example, is s, wherein s is an integer greater than or equal to 1) of memory blocks of the second size (the second size, for example, is a, wherein a is an integer greater than 1) from the sending end shared memory manager. The second number may be, for example, a default value, e.g., 10 (it is not intended to limit the default value in the present disclsoure, which may be, for example, any of 1-100, preferably any of 1-20). Alternatively, the second number may be determined by the sending end memory allocator according to a predetermined rule. For example, the second number may be a predetermined multiple of the number of memory blocks that the sending end memory allocator requested from the sending end shared memory manager last time, e.g., 2 (of course, the present disclsoure is not limited thereto, and the multiple may be, for example, any of 1-100, preferably any of 1-10).

The sending end shared memory manager then requests the second number of shared memory blocks of the second size from the operating system. According to the requesting of the sending end shared memory manager, the operating system allocates the second number of shared memory blocks of the second size, and generates logical addresses (including a starting logical address corresponding to the starting physical address of each shared memory block) for the shared memory blocks, which are provided to the sending end shared memory manager.

The sending end shared memory manager may add nodes at the end of the linked list, wherein each of the added nodes corresponds to a shared memory block allocated by the operating system. In some embodiments, each node in the linked list includes the logical addresses of the corresponding shared memory block. In some embodiments, the logical addresses corresponding to each shared memory block are consecutive, such that each node in the linked list may include only the starting logical address corresponding to the starting physical address of the shared memory block, and a length value of the shared memory block (i.e., the space size of the shared memory block). All the logical addresses corresponding to the shared memory block may be obtained through simple calculation according to the starting logical address and the length value. The sending end shared memory manager then requests identifiers associated with the memory blocks (e.g., file descriptors) from the operating system.

The sending end shared memory manager sends the identifiers (e.g., file descriptors) to the receiving end shared memory manager, and the receiving end shared memory manager sends the identifiers (e.g., file descriptors) to the operating system to query for the shared memory blocks (i.e., the shared memory blocks allocated by the operating system to the first process) corresponding to the identifiers (e.g., file descriptors).

When receiving identifiers (e.g., file descriptors) from the second process, the operating system queries the table to determine shared memory blocks corresponding to the identifiers (e.g., file descriptors) and generate logical addresses corresponding to the shared memory blocks for the second process. The receiving end shared memory manager may add nodes at the end of the linked list, wherein each of the added nodes corresponds to a shared memory block. In some embodiments, each node in the linked list includes the logical addresses of the corresponding shared memory block. In some embodiments, the logical addresses corresponding to each shared memory block are consecutive, such that each node in the linked list may include only the starting logical address corresponding to the starting physical address of the shared memory block, and a length value of the shared memory block (i.e., the space size of the shared memory block). All the logical addresses corresponding to the shared memory block may be obtained through simple calculation according to the starting logical address and the length value.

During, before or after the sending of the identifiers (e.g., file descriptors) to the shared memory manager of the second process, the sending end shared memory manager returns the allocation information of memory blocks to the sending end memory allocator, so as to notify the sending end memory allocator that the memory blocks have been allocated. The sending end memory allocator then determines the logical address space to be used for the extended child message and the corresponding abstract pointer, and provides the abstract pointer to the user (the abstract pointer corresponds to the starting logical address of the logical address space allocated by the sending end memory allocator to the extended child message).

After receiving the abstract pointer, the user may assign a value to the extended child message. At this time, the sending end shared memory manager converts the abstract pointer into a logical address and sends the abstract pointer to the receiving end shared memory manager. The physical address of the corresponding shared memory block may be acquired according to the logical address (i.e., the starting logical address of the logical address space allocated by the sending end memory allocator to the extended child message) obtained through the conversion by the sending end shared memory manager, such that the first process may store (or write) the extended child message in the shared memory block. The receiving end shared memory manager converts the abstract pointer into a logical address after receiving the abstract pointer, and the physical address of the corresponding shared memory block may be acquired according to the logical address obtained through conversion by the receiving end shared memory manager, such that the second process may access the extended child message from the shared memory block.

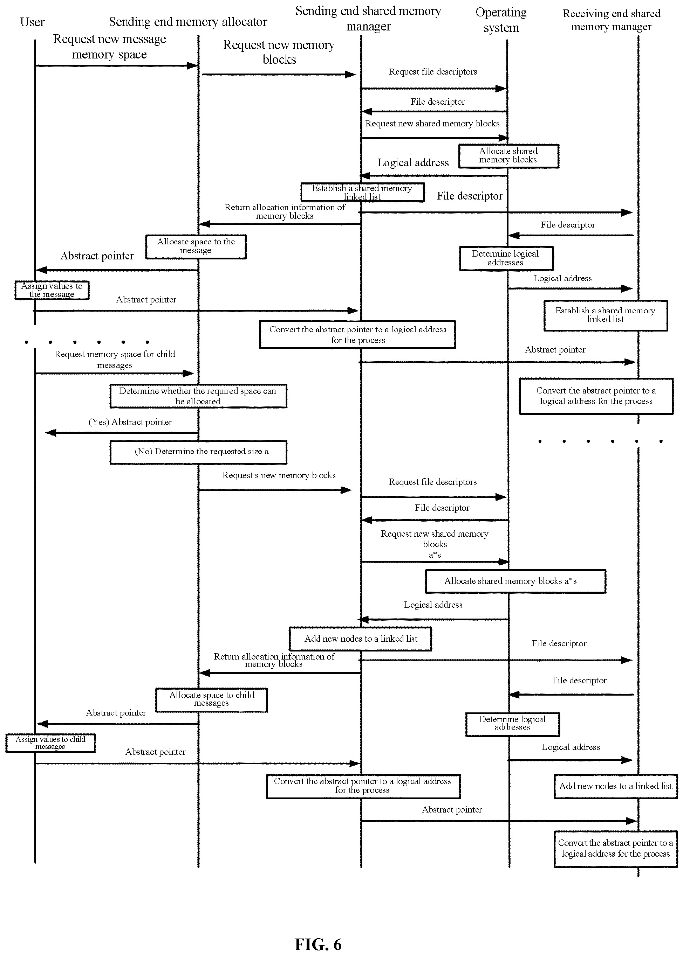

FIG. 6 is another example of inter-process message transmission. The example of FIG. 6 differs from the example of FIG. 5 in that the sending end shared memory manager first requests identifiers (e.g., file descriptors) from the operating system, and then, after receiving the identifiers (e.g., file descriptors) from the operating system, requests shared memory blocks corresponding to the identifiers (e.g., file descriptors) from the operating system.

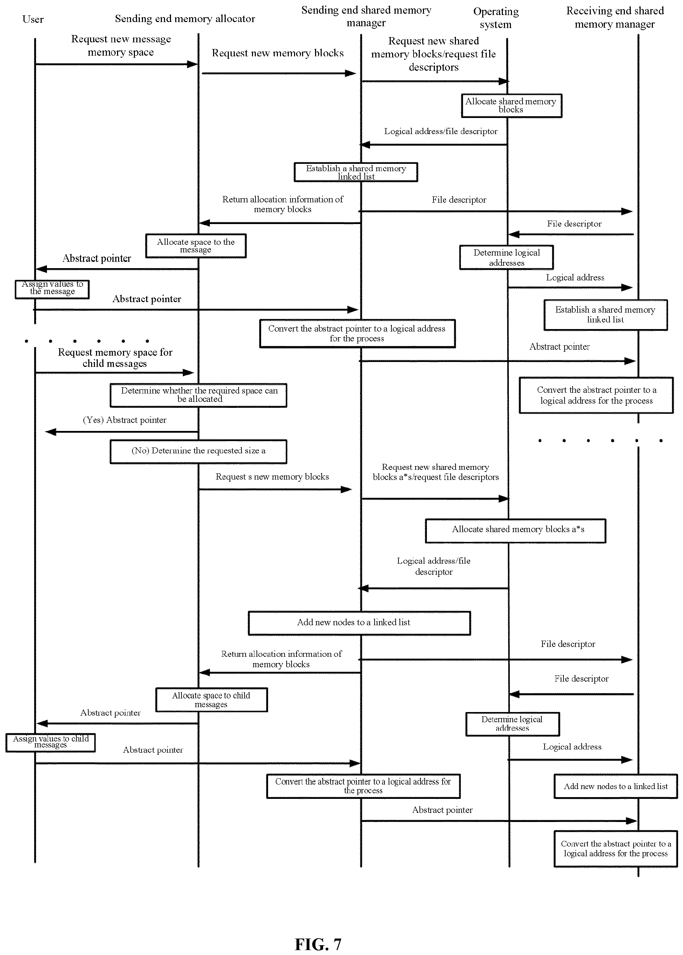

FIG. 7 is yet another example of inter-process message transmission. The example of FIG. 7 differs from the example of FIG. 5 or FIG. 6 in that after the operating system receives the request for the identifiers (e.g., file descriptors) and/or the shared memory blocks, the operating system allocates the shared memory blocks and returns the identifiers (e.g., file descriptors) and logical addresses to the shared memory manager at the same time. In this example, the request from the shared memory manager to the operating system may carry information about the size and number of the required shared memory blocks.

The software system in an autonomous vehicle is generally designed to enable communication by messaging among multiple modules (i.e., processes). By modularization and high decoupling, the fault of a module does not disturb other modules, so as to increase the stability of the system. In addition to the stability, a low delay for message delivery is also required in an autonomous vehicle. Only by ensuring that the message can be rapidly delivered among modules can the real-time performance of an unmanned vehicle be ensured, thus leaving more calculation time for an algorithm module and more decision time for a control module.

The embodiment of the present disclsoure constructs a shared memory visible to multiple processes, thus realizing the direct reading and writing the shared memory by multiple processes. The process sending the message directly writes the message into the shared memory, and the process receiving the message directly reads the message from the shared memory without redundant copying procedures. Since the shared memory is used for message delivery, the time of the message delivery in the autonomous vehicle is effectively reduced, and more time can be left for other modules to achieve early warning and braking and the like, thus improving the safety of the autonomous vehicle.

Embodiments of the present disclsoure support the dynamically extended shared memory management, such that the transmitted message may be dynamically extended, resulting in the absence of redundant copying process in the transmission of the dynamic message, a more efficient inter-process transmission and a reduced copying overhead for static or dynamic messages among different processes.

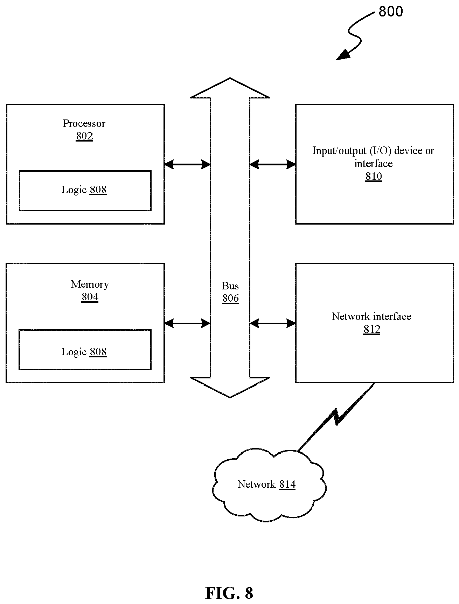

FIG. 8 illustrates a schematic of a machine in the example form of a computing device 800 in which an instruction set, when executed, and/or a processing logic, when initiated, may cause the machine to implement any one or more of the methods described and/or claimed herein. In alternative embodiments, the machine operates as a standalone device or may be connected (e.g., networked) to other machines. In a networked deployment, the machine may operate in the identity of either a server or a client machine in server-client network environments, or as a peer machine in peer-to-peer (or distributed) network environments. The machine may be a personal computer (PC), a laptop computer, a tablet computing system, a personal digital assistant (PDA), a cellular telephone, a smartphone, a network application, a set-top box (STB), a network router, switch or bridge, or any machine capable of executing the instruction set (sequential or otherwise) that specify actions to be taken by that machine or initiating the processing logic. Further, although only a single machine is illustrated, the term "machine" may also be understood to encompass any combination of machines that individually or jointly execute an instruction set (or a plurality of instruction sets) to perform any one or more of the methods described and/or claimed herein.

The exemplary computing device 800 may include a data processor 802 (e.g., a System on Chip (SoC), a general-purpose processing core, a graphics core, and other optional processing logic) and a storage 804 (e.g., memory) that may communicate with each other via a bus 806 or other data transfer system. The computing device 800 may also include various input/output (I/O) devices and/or interfaces 810, such as a touch-screen display, an audio jack, a voice interface, and an optional network interface 812. In exemplary embodiments, the network interface 812 may include one or more radio transceivers configured for use with any one or more standard wireless and/or cellular protocols or access technologies (e.g., second generation (2G), 2.5 generation, third generation (3G), fourth generation (4G), and next-generation radio access of cellular systems, Global System for Mobile Communications (GSM), General Packet Radio Service (GPRS), Enhanced Data GSM Environment (EDGE), Wideband Code Division Multiple Access (WCDMA), LTE, CDMA2000, WLAN, Wireless Router (WR) mesh and the like). The network interface 812 may also be configured for use with various other wired and/or wireless communication protocols (including TCP/IP, UDP, SIP, SMS, RTP, WAP, CDMA, TDMA, UMTS, UWB, WiFi, WiMax, Bluetooth^{©}, IEEE802.11x and the like). In essence, the network interface 812 may virtually include or support any wired and/or wireless communication and data processing mechanism by which information/data may be propagated between the computing device 800 and another computing or communication system via network 814.

The storage 804 may represent a machine-readable medium (or computer-readable storage medium) on which one or more instruction sets, softwares, firmwares, or other processing logics (e.g., logic 808) for performing any one or more of the methods or functions described and/or claimed herein. The logic 808 or a portion thereof, when executed by the computing device 800, may also completely or at least partially reside in the processor 802. Therefore, the storage 804 and the processor 802 may also constitute the machine-readable medium (or computer-readable storage medium). The logic 808 or the portion thereof may also be configured as a processing logic or a logic, of which at least a portion is partially implemented in hardware. The logic 808 or the portion thereof may also be transmitted or received through the network 814 via the network interface 812. The logic 808 may include, for example, an operating system, one or more applications, and other program modules. Although the machine readable medium (or computer readable storage medium) of the exemplary embodiments may be a single medium, the term "machine readable medium" (or computer readable storage medium) may be understood to include a single non-transitory medium or multiple non-transitory media (e.g., a centralized or distributed database, and/or an associated cache and computing system) that store one or more instruction sets. The term "machine-readable medium" (or computer-readable storage medium) may also be understood to include any non-transitory medium that is capable of storing, encoding or carrying an instruction set for execution by the machine and that cause the machine to perform any one or more of the methods of the various embodiments or that is capable of storing, encoding or carrying data structures utilized by or associated with such an instruction set. The term "machine-readable medium" (or computer-readable storage medium) may accordingly be taken to include, but not be limited to, solid-state storages, optical media, and magnetic media.

The disclosed and other embodiments, modules, and functional operations described herein may be implemented in digital electronic circuitry, or in computer software, firmware or hardware (including the structures disclosed herein and structural equivalents thereof), or in combinations of one or more. The disclosed and other embodiments may be implemented as one or more computer program products, that is, one or more modules of computer program instructions encoded on a computer-readable medium for execution by, or control of the operation of, data processing apparatus. The computer-readable medium may be a machine-readable storage device, a machine-readable storage substrate, a memory device, a composition of matter impacting machine-readable propagated signals, or a combination of one or more. The term "data processing apparatus" encompasses all apparatus, devices, and machines for processing data, including, for example, a programmable processor, a computer, or multiple processors or computers. In addition to hardware, the apparatus may further include codes that create an execution environment for the computer program in question, e.g., codes that constitute processor firmware, a protocol stack, a database management system, an operating system, or a combination of one or more. A propagated signal is an artificially generated signal (e.g., a machine-generated electrical, optical, or electromagnetic signal) that is generated to encode information for transmission to suitable receiver apparatus.

A computer program (also referred to as a program, software, a software application, a script, or a code) may be written in any form of programming language (including compiled languages or interpreted languages), and the computer program may be deployed in any form, including as an independent program or as a module, a component, a subroutine, or another unit suitable for use in a computing environment. A computer program does not necessarily correspond to a file in a file system. A program can be stored in a portion of a file that holds other programs or data (e.g., one or more scripts stored in a markup language document), stored in a single file dedicated to the program in question, or stored in multiple collaborative files (e.g., files that store one or more modules, sub programs, or portions of code). A computer program may be deployed for execution on one computer or on multiple computers that are located at one site or distributed across multiple sites and interconnected by a communication network.

The processes and logic flows described herein may be executed by one or more programmable processors executing one or more computer programs to perform functions by operating on input data and generating output. The processes and logic flows may also be executed by, and the apparatus may also be implemented as, a special purpose logic circuitry (e.g., an FPGA (field-programmable gate array) or an ASIC (application-specific integrated circuit)).

Processors suitable for executing a computer program include, for example, both general-purpose microprocessors and special purpose microprocessors, and any one or more processors of any kind of digital computer. Generally, a processor will receive instructions and data from a read-only memory or a random access memory or both. The necessary elements of a computer are a processor for executing instructions and one or more storage devices for storing instructions and data. Generally, a computer may also include one or more mass-storage devices for storing data (e.g., magnetic disks, magneto-optical disks, or optical disks), or the computer may also be operatively coupled to receive data from or transfer data to the one or more mass-storage devices, or both. However, the computer does not necessarily have such devices. Computer-readable media suitable for storing computer program instructions and data include all forms of non-volatile memory, media and memory devices, including, e.g., semiconductor storage devices (e.g., EPROM, EEPROM, and a flash storage device), magnetic disks (e.g., an internal hard disk or a removable disk), magneto-optical disks, and CD-ROM disks and DVD-ROM disks. The processor and the storage can be supplemented by, or incorporated in, the special purpose logic circuitry system.

Although the present disclosure contains many details, these should not be construed as limitations on the scope of any invention or of what may be claimed, but rather as descriptions of features specific to particular embodiments of particular inventions. Certain features that are described herein in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially required, one or more features from a required combination may in some cases be excised from the combination, and the required combination may be directed to a subcombination or variation of a subcombination.

Similarly, although operations are depicted in the drawings in a particular order, this should not be understood as requiring that such operations be executed in a particular order shown or in a sequential order, or that all illustrated operations be executed, to achieve desirable results. Moreover, the separation of various system components in the embodiments described herein should not be understood as requiring such separation in all embodiments.

Only some implementations and examples are described and other implementations, enhancements and changes may be made based on what is described and illustrated herein.

The illustrations of embodiments described herein are intended to provide a general understanding of the structure of various embodiments, and they are not intended to serve as a complete description of all of the elements and features of components and systems that may utilize the structures described herein. Many other embodiments will be apparent to those of ordinary skill in the art upon reviewing the description provided herein. Other embodiments may be utilized and derived, such that structural and logical replacements and changes may be made without departing from the scope of this disclosure. The drawings herein are merely representational and may not be drawn to scale. Certain proportions may be exaggerated, while other proportions may be minimized. Accordingly, the specification and drawings are to be regarded as illustrative rather than restrictive.

Some embodiments implement functions in two or more particular interconnected hardware modules or devices with related control and data signals conveyed among and through modules, or as portions of an application-specific integrated circuit. Accordingly, the exemplary systems are applicable to software, firmware, and hardware implementations.

Although exemplary embodiments or examples of the present disclosure have been described with reference to the accompanying drawings, it should be understood that the above exemplary discussion is not intended to be exhaustive or to limit the present invention to the precise forms disclosed. Many modifications and variations are possible in view of the above teachings. Therefore, the disclosed subject matter should not be limited to any single embodiment or example described herein, but rather should be construed in breadth and scope in accordance with the appended claims.

## Claims

1. A method for inter-process communication, comprising:
receiving, by a first process, a request for a storage space of a first size;
requesting, by the first process, a first number of shared memory blocks from an operating system, wherein a storage space of each shared memory block is not smaller than the first size;
in response to the operating system allocating the first number of shared memory blocks, adding, by the first process, the first number of first nodes in a first linked list, wherein each of the first nodes corresponds to a respective one of the allocated shared memory blocks; and
sending, by the first process, identifiers associated with the allocated shared memory blocks to a second process.

2. The method according to claim 1, wherein each of the first nodes comprises a starting logical address corresponding to a starting address of the shared memory block corresponding to the first node, and a length value corresponding to a size of the storage space of the shared memory block corresponding to the first node.

3. The method according to claim 1 or 2, further comprising:
adding, by the second process, the first number of second nodes in a second linked list according to the identifiers, wherein each of the second nodes corresponds to a respective one of the allocated shared memory blocks.

4. The method according to claim 3, wherein each of the second nodes comprises a starting logical address corresponding to a starting address of the shared memory block corresponding to the second node, and a length value corresponding to a size of the storage space of the shared memory block corresponding to the second node.

5. The method according to any one of claims 1-4, further comprising:
allocating, by the first process, a storage space of the first size for the request, and
providing, by the first process, an abstract pointer for accessing the allocated storage space,
wherein the abstract pointer represents an offset from a starting logical address of a beginning one of the first nodes in the first linked list.

6. The method according to claim 5, further comprising:
in response to a user assigning a value to a message, determining, by the first process, a logical address for the message according to the abstract pointer; and
sending, by the first process, the abstract pointer to the second process to enable the second process to access the message according to the abstract pointer.

7. The method according to any one of claims 1-6, wherein the first number of first nodes are a first group of nodes, the allocated first number of shared memory blocks is a first group of shared memory blocks, the first linked list further comprises a second group of nodes corresponding to a second group of shared memory blocks,
wherein adding, by the first process, the first number of first nodes in the first linked list comprises:
adding, by the first process, the first number of first nodes after the second group of nodes in the first linked list.

8. The method according to claim 7, wherein each of the second group of nodes represents a segment of consecutive logical addresses corresponding to physical addresses of the shared memory block corresponding to the node.

9. The method according to claim 8, wherein the first process stores use state information of logical addresses represented by the second group of nodes, and the method further comprises:
determining, by the first process, whether a contiguous storage space of the first size is available in the second group of shared memory blocks or not according to the use state information.

10. The method according to claim 9, wherein requesting, by the first process, the first number of shared memory blocks from the operating system comprises:
in response to the first process determining that the contiguou storage space of the first size is unavailable in the second group of shared memory blocks, requesting, by the first process, the first number of shared memory blocks from the operating system.

11. The method according to any one of claims 7-10, further comprising:
in response to a request from a user for a storage space of a second size for a message, requesting, by the first process, the second group of shared memory blocks from the operating system.

12. The method according to claim 11, wherein the message comprises a plurality of child messages, and
wherein receiving, by the first process, the request for the storage space of the first size comprises:
receiving, by the first process, the request for the storage space of the first size for at least one of the plurality of child messages,
wherein the first size is greater than the second size.

13. The method according to any one of claims 1-12, wherein sending, by the first process, the identifiers associated with the allocated shared memory blocks to the second process comprises:
sending, by the first process, the first number of identifiers to the second process, wherein each of the identifiers is associated with one of the allocated shared memory blocks.

14. A computing device, comprising:
one or more processors; and
a memory storing one or more programs that, when being executed by the one or more processors, causes the one or more processors to implement the method according to any of claims 1-13.

15. A computer-readable storage medium having a program stored thereon, wherein the program, when being executed by a processor, implements the method according to any one of claims 1-13.
